# EUROPEAN PATENT APPLICATION

(11) **EP 4 567 081 A1**
(43) Date of publication of application: **11.06.2025**
(21) Application number: 24216448.1
(22) Date of filing: 29.11.2024
(51) Int. Cl.: C09D 11/324, C09D 11/326, C09D 11/107, C09D 11/38

(54) **AQUEOUS-INKJET PIGMENT DISPERSION AND METHOD FOR MANUFACTURING THE SAME**

(30) Priority: 05.12.2023 JP 2023205380; 04.10.2024 JP 2024175136
(71) Applicant: Sanyo Color Works, Ltd., Himeji-shi, Hyogo 670-0966 (JP)
(72) Inventor: KURODA, Yasuhiro, Hyogo (JP); HARADA, Tomonori, Hyogo (JP)
(74) Representative: Valenza, Silvia

(57) **Abstract**

The present invention relates to an aqueous-inkjet pigment dispersion including a black pigment, a dispersant, an organic solvent, and water, the black pigment being carbon black having a dibutyl phthalate (DBP) absorption amount of 80 to 150 cm³/100 g, the dispersant containing a benzyl acrylate-based copolymer as an active ingredient, the organic solvent containing at least one selected from a glycol ether having 4 to 10 carbon atoms, a monohydric alcohol, and a polyhydric alcohol, and each of the monohydric alcohol and the polyhydric alcohol being a chain saturated alcohol having 4 to 10 carbon atoms, and a total amount of the organic solvent being 1 to 8% by weight in a total amount of the aqueous-inkjet pigment dispersion.

According to the present invention, it is possible to provide a pigment dispersion useful for manufacturing an aqueous inkjet ink having excellent filter filterability, and a method for manufacturing the pigment dispersion.

## Description

### Field

The present invention relates to an aqueous-inkjet pigment dispersion and a method for manufacturing the same, and particularly relates to an aqueous-inkjet pigment dispersion using carbon black as a pigment and a method for manufacturing the same.

### Background

In recent years, due to improvement in image quality and printing speed, inkjet printers have come to be used not only in printing at home but also in printing in various businesses such as creation of business documents. On the other hand, for example, in printing for business and industrial applications such as the latter, further improvement in image quality, higher printing speed, and the like are required, and various studies have been made to cope with these (for example, Patent Literatures (PTLs) 1 to 3).

PTL 1 suggests that a specific urethane resin is used in an aqueous inkjet ink containing a pigment and a urethane resin, and that the dynamic surface tension of the aqueous ink is in a predetermined range, in order to record an image having excellent character quality, and also to record an image having durability such as marker resistance with which the image will not get dirty even when being traced with a marker pen.

As the properties required for a coloring composition (ink) become more advanced, the dispersibility of a colorant is not sufficient with a conventional dispersant. In addition, if an amount of the dispersant used is increased, heat resistance becomes an issue, such as a change in hue due to heating during or after ink ejection. In view of the situation, PTL 2 suggests a polymerization product containing specific block copolymers in a predetermined range and a coloring composition containing the polymerization product, in order to provide a dispersant having excellent dispersibility even in a small amount.

PTL 3 suggests that resin particles contained in the inkjet recording aqueous ink are composed of a predetermined polymer, and the storage elastic modulus of a dried and solidified ink film at 25°C is in a predetermined range in order to provide an inkjet recording aqueous ink that improves the rubbing resistance at recording on coated paper.

### Citation List

### Patent Literature

PTL 1: Japanese Unexamined Patent Application Publication No. 2018-150514
PTL 2: Japanese Unexamined Patent Application Publication No. 2021-98835
PTL 3: Japanese Unexamined Patent Application Publication No. 2022-156109

### Summary

### Technical Problem

The market's demand for high image quality and high printing speed in inkjet printing may be satisfied by the above-described conventional technique. However, the study of the present inventors has revealed that some of these conventional techniques exhibit poor filterability. For example, filtration pressure should be increased in a filter filtration step usually performed at the final stage of manufacturing the inkjet ink, or frequent replacement of the filter is required due to easy clogging in the filter. Thus, the power consumption may increase, the number of filters used, the number of steps of replacing the filter, an amount of ink loss, and the like may increase.

In view of the above, an object of the present invention is to provide a pigment dispersion capable of manufacturing an aqueous inkjet ink having good filter filterability, and a method for manufacturing the pigment dispersion.

### Solution to Problem

The present inventors have conducted intensive studies for solving the above-described problems. As a result, the present inventors have found that a pigment dispersion usable for manufacturing an aqueous inkjet ink having good filter filterability can be obtained by adopting a specific pigment, dispersant, and organic solvent and setting a total amount of the organic solvent to a predetermined range in the aqueous-inkjet pigment dispersion. The present invention relates to the following (1) to (4).
(1) An aqueous-inkjet pigment dispersion including a black pigment, a dispersant, an organic solvent, and water, the black pigment being carbon black having a dibutyl phthalate (DBP) absorption amount of 80 to 150 cm³/100 g, the dispersant containing a benzyl acrylate-based copolymer as an active ingredient, the organic solvent containing at least one selected from a glycol ether having 4 to 10 carbon atoms, a monohydric alcohol, and a polyhydric alcohol, and each of the monohydric alcohol and the polyhydric alcohol being a chain saturated alcohol having 4 to 10 carbon atoms, and a total amount of the organic solvent being 1 to 8% by weight in a total amount of the aqueous-inkjet pigment dispersion.
(2) The aqueous-inkjet pigment dispersion according to the above (1), in which the dispersant is contained in an amount of 15 to 60 parts by weight on a solid content basis with respect to 100 parts by weight of the black pigment.
(3) A method for manufacturing the aqueous-inkjet pigment dispersion according to the above (1) or (2), the method including obtaining a mixed liquid containing the black pigment, the dispersant, the organic solvent, and the water, the mixed liquid being adjusted so that a content of the organic solvent in a total amount of the mixed liquid is 1 to 8% by weight, and dispersing the mixed liquid.
(4) An aqueous inkjet ink containing the aqueous-inkjet pigment dispersion according to the above (1) or (2).

### Advantageous Effects

According to the present invention, it is possible to provide a pigment dispersion usable for manufacturing an aqueous inkjet ink having good filter filterability, and a method for manufacturing the pigment dispersion.

### Description of Embodiments

### (Aqueous-inkjet pigment dispersion)

An aqueous-inkjet pigment dispersion according to an embodiment of the present invention (hereinafter may be simply referred to as a "pigment dispersion") contains a black pigment, a dispersant, an organic solvent, and water. Each component contained in the pigment dispersion is as follows. The black pigment is carbon black having a dibutyl phthalate (DBP) absorption amount of 80 to 150 cm³/100g. The dispersant contains a benzyl acrylate-based copolymer as an active ingredient. The organic solvent contains at least one selected from glycol ethers having 4 to 10 carbon atoms, monohydric alcohols, and polyhydric alcohols. The monohydric alcohols and the polyhydric alcohols are chain saturated alcohols having 4 to 10 carbon atoms. Furthermore, the total amount of organic solvents is 1 to 8% by weight in the entire aqueous-inkjet pigment dispersion.

As described above, specific black pigment, dispersant, and organic solvent in a predetermined range are adopted, and dispersion treatment is performed, thereby obtaining pigment dispersion that exhibits excellent filter filterability at production of an aqueous inkjet ink. The filter filterability for the pigment dispersion can be evaluated by a method described in the section of Examples to be described later.

Hereinafter, components of the pigment dispersion will be described.

As described above, it is merely required that the black pigment is carbon black having the DBP absorption amount of 80 to 150 cm³/100 g. As the carbon black, channel black, furnace black, acetylene black, or the like can be used as long as the DBP absorption amount is within a predetermined range. The size of the carbon black may be a general size applicable to inkjet ink, and for example, an average primary particle size can be 13 to 25 nm, and is preferably 15 to 20 nm. The average primary particle size can be calculated as an average value of the major axis and the minor axis (an average value for the number of measurements corresponding to 1/2 of the sum of the major axis (nm) and the minor axis (nm) of one particle) when 100 or more pigment particles are observed with a transmission electron microscope. The DBP absorption amount can be measured in accordance with JIS K6221. In addition, an average particle size of secondary particles in which the primary particles are aggregated is usually 50 to 200 nm. The average particle size can be measured by a general method such as a dynamic light scattering method or a laser diffraction method. More specifically, for example, it can be measured using a zeta potential/particle size/molecular weight measurement system (ELSZ-2000ZS manufactured by Otsuka Electronics Co., Ltd.).

A value of pH of the carbon black is not particularly limited, but is preferably 6.0 to 9.0.

As such carbon black, a commercially available carbon black can be used. Examples of such carbon black include MA600, MA600B, #750B, #650B, #40, #40B, MA100, MA100R, and #3230B manufactured by Mitsubishi Chemical Corporation, HIBLACK 890, HIBLACK 30, COLOUR BLACK FW1, COLOUR BLACK S160, COLOUR BLACK S170, NEROX 510, NEROX 600, SPECIAL BLACK 4, SPECIAL BLACK 5, SPECIAL BLACK 6, NIPex 60, NIPex 90, NIPex 160IQ, NIPex 170IQ, NIPex 180IQ, and PRINTEX U manufactured by Orion Engineered Carbons Co., Ltd., TOKABLACK #3855 manufactured by Tokai Carbon Co., Ltd., SUNBLACK 305, SUNBLACK 320, and SUNBLACK X15 manufactured by Asahi Carbon Co., Ltd., and NITELON #300IH ISAF-HS, NITELON #300 ISAF, and NITELON #200IS HAF-HS manufactured by Nippon Steel Carbon Co., Ltd.

Carbon black having predetermined properties may be used alone or in combination of two or more kinds of them.

The content of the black pigment is preferably as high as possible within a range in which stability can be maintained, and is preferably 15.0 to 25.0% by weight in the pigment dispersion.

As described above, the dispersant is merely required to contain a benzyl acrylate-based copolymer as an active ingredient. The benzyl acrylate-based copolymer is merely required to be a copolymer composed of a constituent unit derived from benzyl acrylate and a constituent unit derived from a monomer polymerizable with benzyl acrylate. The copolymer may be a random copolymer or a block copolymer, but is preferably a block copolymer from a viewpoint of further improvement in filter filterability. The block copolymer preferably contains a hydrophilic block (hereinafter may be referred to as a "block A") and a hydrophobic block (hereinafter may be referred to as a "block B"). Here, the hydrophilic block means a block having a relatively higher affinity for water than the hydrophobic block. For example, the copolymer is configured in a manner that the hydrophilic block contains a hydrophilic monomer to be described later, and the hydrophobic block does not contain the hydrophilic monomer or contains the hydrophilic monomer so that the proportion of hydrophilic functional groups contained in the hydrophobic block is smaller than that of the hydrophilic block. It is preferable that the hydrophobic block does not contain the hydrophilic monomer.

Examples of the monomer polymerizable with benzyl acrylate include the hydrophilic monomer as described above and monomers other than the hydrophilic monomer (hereinafter may be referred to as a "hydrophobic monomer").

Examples of the hydrophilic monomer include monomers containing a carboxyl group or an acid anhydride group, such as (meth)acrylic acid, unsaturated polycarboxylic acids including maleic acid, and maleic anhydride; monomers containing a sulfonic acid group such as styrenesulfonic acid and 4-(methacryloyloxy)butylsulfonic acid; and ethylene oxide-modified (meth)acrylic acid ester monomers such as ethylene oxide-modified (meth)acrylic acid alkyl esters. Among them, (meth)acrylic acid and unsaturated polycarboxylic acids such as maleic anhydride are preferable, and (meth)acrylic acid is more preferable. The hydrophilic monomer may be used alone or in combination of two or more kinds of them. In the case of combining two or more types, each of the structures of the blocks A and B may be a random polymer or a block polymer. Furthermore, the (meth)acrylic acid means methacrylic acid and/or acrylic acid.

Examples of the hydrophobic monomer include styrene-based monomers such as styrene, α-methylstyrene, and vinyltoluene; α-olefinic monomers such as ethylene, propylene, and 1-butene; and vinyl-based monomers having a phenyl group, a biphenyl group, a naphthyl group, and the like. The hydrophobic monomer may be used alone or in combination of two or more kinds thereof. In the case of combining two or more types, each of the structures of the blocks A and B may be a random polymer or a block polymer. Furthermore, benzyl acrylate corresponds to a hydrophobic monomer.

The structure of the benzyl acrylate-based copolymer is preferably composed of a block A composed of a constituent unit derived from benzyl acrylate and the hydrophilic monomer, and a block B composed of a constituent unit derived from the hydrophobic monomer, more preferably composed of a block A composed of a constituent unit derived from benzyl acrylate and a hydrophilic monomer, and a block B composed of a constituent unit derived from one or more hydrophobic monomers containing benzyl acrylate, further preferably composed of a block A composed of a constituent unit derived from benzyl acrylate and (meth)acrylic acid, and a block B composed of a constituent unit derived from benzyl acrylate, and particularly preferably composed of a block A composed of a constituent unit derived from benzyl acrylate, methacrylic acid, and acrylic acid, and a block B composed of a constituent unit derived from benzyl acrylate.

A content ratio (weight ratio A/B) of the block A and the block B can be appropriately determined according to the type and content of the components, but is preferably 30/70 to 70/30. When the block A is composed of a constituent unit derived from benzyl acrylate (X) and (meth)acrylic acid (Y), the content ratio (weight ratio X/Y) in the block A is preferably 1/1 to 3/1. Furthermore, when the (meth)acrylic acid is acrylic acid (Y1) and methacrylic acid (Y2), the content ratio (weight ratio Y1/Y2) in the block A is preferably 200/1 to 100/1.

Peak top molecular weight of the benzyl acrylate-based copolymer is not particularly limited, but is preferably 5,000 to 20,000, and more preferably 6,000 to 15,000 from the viewpoint of further improvement in filter filterability. The peak top molecular weight of the benzyl acrylate-based copolymer can be measured by gel permeation chromatography (GPC). An acid value of the benzyl acrylate-based copolymer is not particularly limited, but is preferably 100 to 200 mgKOH/g from the viewpoint of further improvement in filter filterability. The acid value (acid value in terms of solid content) can be determined, for example, by a method in accordance with DIN EN ISO 2114.

An amine value of the benzyl acrylate-based copolymer is not particularly limited, but is preferably 10 mgKOH/g or less, and particularly preferably 0 mgKOH/g. The amine value (amine value in terms of solid content) can be determined, for example, by a method in accordance with DIN 16945.

A method for synthesizing the block copolymer composed of the block A and the block B is not particularly limited, but for example, the block copolymer can be obtained by subjecting the monomer of the block A to living polymerization to obtain a polymer, and then subjecting the obtained polymer and the monomer of the block B to living polymerization. Polymerization is not limited to the living polymerization, and may be radical polymerization.

When the benzyl acrylate-based copolymer contains the block A, it is preferable that the polymer is isolated, and then the polymer, a base such as sodium hydroxide, and pure water are mixed to obtain a polymer solution having a pH of 7.5 to 10.0. This polymer solution can be used as a dispersant.

The content of the dispersant is not particularly limited, but is preferably 15 to 60 parts by weight, more preferably 20 to 55 parts by weight, and still more preferably 25 to 45 parts by weight on a solid content basis with respect to 100 parts by weight of the black pigment.

As described above, the organic solvent contains at least one selected from glycol ethers having 4 to 10 carbon atoms, monohydric alcohols, and polyhydric alcohols. It is merely required that the monohydric alcohols and the polyhydric alcohols are chain saturated alcohols having 4 to 10 carbon atoms. These organic solvents may be used alone or in combination of two or more kinds thereof. From the viewpoint of further improving the filter filterability, the organic solvent is preferably one or more selected from glycol ethers having 4 to 10 carbon atoms, predetermined monohydric alcohols, and predetermined polyhydric alcohols, more preferably one or more selected from predetermined monohydric alcohols and predetermined polyhydric alcohols, still more preferably one or more selected from polyhydric alcohols, and particularly preferably one or two or more selected from dihydric alcohols.

The organic solvent only needs to contain the above-mentioned predetermined organic solvent. Although other organic solvents may be contained as long as the filter filterability is not impaired, it is preferable that the organic solvents are not substantially contained.

Examples of the glycol ethers having 4 to 10 carbon atoms include alkylene glycol monoalkyl ethers having 4 to 10 carbon atoms. Examples of such alkylene glycol monoalkyl ethers include ethylene glycol monoethyl ether, ethylene glycol monobutyl ether, ethylene glycol mono-t-butyl ether, ethylene glycol monopropyl ether, ethylene glycol monoisopropyl ether, diethylene glycol monomethyl ether, diethylene glycol monoethyl ether, diethylene glycol monoisopropyl ether, diethylene glycol monobutyl ether, diethylene glycol mono-t-butyl ether, triethylene glycol monoethyl ether, triethylene glycol monobutyl ether, propylene glycol monomethyl ether, propylene glycol monoethyl ether, propylene glycol monobutyl ether, propylene glycol-t-butyl ether, propylene glycol monopropyl ether, dipropylene glycol monomethyl ether, dipropylene glycol monoethyl ether, dipropylene glycol monobutyl ether, dipropylene glycol monopropyl ether, and dipropylene glycol monoisopropyl ether.

The number of carbon atoms of the glycol ethers may be 4 to 10, but is more preferably 8 to 10 from a viewpoint of the filter filterability.

The monohydric alcohol is a chain saturated alcohol having 4 to 10 carbon atoms, and is an organic compound having a structure in which one hydrogen atom of a saturated aliphatic hydrocarbon having 4 to 10 carbon atoms is substituted with a hydroxyl group. The chain structure of the alcohol may be linear or may have a branched chain. The position of the hydroxyl group is not particularly limited, and may be any of primary to tertiary alcohols. The number of carbon atoms is preferably 4 to 8. Examples of the chain saturated monohydric alcohol having 4 to 10 carbon atoms include butanols such as 1-butanol, 2-butanol, 2-methyl-1 propanol, and 2-methyl-2-propanol; pentanols such as 1-pentanol, 2-pentanol, 3-pentanol, 2-methyl-1-butanol, 2-methyl-2-butanol, 3-methyl-2-butanol, and 2,2-dimethyl-1-propanol; hexanols such as 1-hexanol, 2-hexanol, 3-hexanol, 2-methyl-1-pentanol, 3-methyl-1-pentanol, 4-methyl-1-pentanol, 2-methyl-2-pentanol, 3-methyl-2-pentanol, 4-methyl-2-pentanol, 2-methyl-3-pentanol, 3-methyl-3-pentanol, 2,2-dimethyl-1-butanol, 2,3-dimethyl-1-butanol, 3,3-dimethyl-1-butanol, 2,3-dimethyl-2-butanol, 3,3-dimethyl-2-butanol, and 2-ethyl-1-butanol; heptanols such as 1-heptanol, 2-heptanol, 3-heptanol, 4-heptanol, and 2-methyl-1-hexanol; octanols such as 1-octanol, 2-octanol, 3-octanol, 2-methyl-1-heptanol, and 2-ethyl-1-hexanol; nonanols such as 1-nonanol, 2-nonanol, 3-nonanol, 2-methyl-1-octanol, and 3-methyl-3-octanol; and decanols such as 1-decanol, 2-decanol, 3-decanol, 2-methyl-1-nonanol, and 3-methyl-3-nonanol.

The polyhydric alcohol is a chain saturated alcohol having 4 to 10 carbon atoms, and is an organic compound having a structure in which two or more hydrogen atoms of a saturated aliphatic hydrocarbon having 4 to 10 carbon atoms are substituted with hydroxyl groups. The chain structure of the alcohol may be linear or may have a branched chain. The position of the hydroxyl group is also not particularly limited. The number of carbon atoms is preferably 4 to 8. The valence is not particularly limited, but is preferably divalent. Examples of the chain saturated polyhydric alcohol having 4 to 10 carbon atoms include butanediols such as 1,2-butanediol, 1,3-butanediol, 1,4-butanediol, 2,3-butanediol, and 2-methyl-1,3-propanediol; pentanediols such as 1,2-pentanediol, 1,5-pentanediol, and 2-methyl-1,3-butanediol; hexanediols such as 1,2 hexanediol, 1,5 hexanediol, 3-methyl-1,5-pentanediol, and 2-methyl-2,4 pentanediol; heptanediols such as 1,2-heptanediol and 1,7-heptanediol; octanediols such as 1,2-octanediol, 1,8-octanediol, 2-ethyl-1,3-hexanediol, 2,2,4-trimethyl-1,3-pentanediol, and 2,2-dimethyl-1,3-propanediol; nonanediols such as 1,2-nonanediol, 1,9-nonanediol, and 2-butyl-2 ethyl-1,3-propanediol; decanediols such as 1,2 decanediol and 1,10 decanediol; tetritols such as erythritol and traytol; pentitols such as xylitol; and hexitols such as mannitol.

Among them, the polyhydric alcohol is preferably, in particular, 1,2-butanediol, 1,2-pentanediol, 1,2-hexanediol, 1,2-heptanediol, or 1,2-octanediol, and more preferably 1,2-hexanediol.

Regarding a content of the organic solvent, a total amount of the organic solvent is 1 to 8% by weight in the entire pigment dispersion. The content is preferably 2 to 5% by weight. The content in the pigment dispersion is set within such a range, thereby obtaining an effect of the organic solvent in the manufacturing method to be described later. Thus, an effect of improving the filter filterability of the aqueous inkjet ink prepared from the pigment dispersion tends to be easily obtained.

The water is not particularly limited, but water from which impurities have been removed is preferable. Examples of such water include pure water such as ion-exchanged water, distilled water, and RO water (purified water by a reverse osmosis membrane). A content of water can be appropriately determined, and can be, for example, 51.6 to 80.6% by weight in the entire pigment dispersion. Furthermore, when water is contained in the dispersant or other components to be described later, such water is also contained in the entire pigment dispersion.

In addition to the above-described components, other components can be added to the pigment dispersion as necessary. Examples of such components include a pH adjusting agent, a pigment derivative, an antioxidant, an aggregation inhibitor, a surface adjusting agent (leveling agent), and an antifoaming agent. Examples of the pH adjusting agent include an aqueous solution containing a base such as sodium hydroxide.

In the pigment dispersion having the component composition as described above, a large number of particles pass through a filter, in the filter filterability test to be described later, for example. Accordingly, excellent good filter filterability can be imparted to the inkjet ink. In the filter filtration step generally carried out at the final stage of the manufacturing step of the ink for inkjet, excellent filterability can be realized, thereby decreasing/reducing pressure upon the filtration, a use amount and the number of replacements of the filter, loss of the ink, and the like. Therefore, the labor for the filtration treatment can be saved, and the inkjet ink can be provided in consideration of the environment, at low cost. The pigment dispersion has a normal viscosity applicable to aqueous inkjet inks. This viscosity can be measured at 25°C using, for example, an E-type viscometer (TV-22 manufactured by Toki Sangyo Co., Ltd.).

### (Method for Manufacturing Aqueous-inkjet pigment dispersion)

The pigment dispersion described above can be manufactured, for example, as follows.

First, a mixed liquid containing the black pigment, the dispersant, the organic solvent, and water (other components as necessary) is prepared, and the content of the organic solvent in the entire mixed liquid is adjusted to 1 to 8% by weight. The content is preferably 2 to 5% by weight, and more preferably 3.5 to 5% by weight. When the content of the organic solvent is within such a predetermined range in the dispersion step to be described later, the organic solvent increases the pigment's affinity for water, and assists the adsorption of the pigment and the dispersant. Furthermore, the filterability of the pigment through the filter is improved regardless of the average particle size after the dispersion treatment, and the filter filterability of the finally obtained aqueous inkjet ink is improved. It is presumed that when the content of the organic solvent is more than 8% by weight, the dispersant adsorbed to the pigment starts to leave from the pigment. As a result, although the mechanism is not necessarily clear, it is considered that the filterability of the aqueous inkjet ink prepared from the obtained pigment dispersion is deteriorated due to, for example, hindering the crushing of pigment aggregation during dispersion or generating aggregation after dispersion.

As described above, the usable organic solvent is merely required to contain one or more selected from a glycol ether having 4 to 10 carbon atoms, a predetermined monohydric alcohol, and a polyhydric alcohol. From a viewpoint of the filter filterability of the inkjet ink obtained using the pigment dispersion, the usable organic solvent is preferably one or more selected from a predetermined monohydric alcohol and a polyhydric alcohol, and more preferably one or more selected from a polyhydric alcohol. In addition, the content of the organic solvent may be appropriately adjusted according to the composition of other components contained in the pigment dispersion. For example, when a chain saturated dihydric alcohol(diol) having 4 to 8 carbon atoms is used as the organic solvent, the content of the organic solvent during the dispersion treatment is preferably 2 to 5% by weight in the pigment dispersion. Further, when the diol is 1,2-hexanediol, the content of the diol during the dispersion treatment is preferably 3.5 to 5% by weight in the pigment dispersion.

Next, a step of dispersing a mixed liquid 1 in which a concentration of the organic solvent is adjusted as described above is performed (dispersion step). The dispersion treatment can be performed in accordance with a conventional method using a general distribution treatment apparatus. Examples of the dispersion treatment apparatus include a bead mill, a sand mill, an attritor, a disper, a paint conditioner, and a kneader. When the dispersion medium (medium) is used, its type is not particularly limited, and glass beads, zirconia beads, alumina beads, stainless steel beads, and the like can be used. A size of the medium is not particularly limited, and can be appropriately selected according to various conditions, and for example, a medium having φ 1.00 mm or less can be used. Furthermore, if necessary, the dispersion treatment may be performed so that the size of the medium is reduced in stages. In addition, when the dispersion treatment is performed as described above, a preliminary dispersion treatment performed with a load smaller than a load at the time of the dispersion treatment may be performed after preparing mixed liquid. When the preliminary dispersion treatment is performed, a concentration of the organic solvent in the mixed liquid may or may not be adjusted to fall within the predetermined range described above.

After the dispersion treatment step, a step of adding water and stirring the mixture may be performed as necessary in order to adjust the pigment concentration and the like (adjustment step). At this time, since the black pigment is uniformly dispersed by the dispersion treatment, a simple stirring operation may be performed. The stirring may be performed using the above-described dispersion treatment apparatus. Thereafter, when the dispersion treatment is performed using a medium, the medium is removed, and a desired pigment dispersion can be obtained. The removal of the medium may be performed before the adjustment step. Here, the removal is preferably performed after the adjustment step from a viewpoint of accuracy of the adjustment of the concentration, and the like.

### (Aqueous Inkjet Ink)

The aqueous inkjet ink according to the embodiment of the present invention includes the above-described aqueous-inkjet pigment dispersion. That is, the aqueous inkjet ink may contain the above-described black pigment, dispersant, organic solvent, and water constituting the pigment dispersion, and other components added as necessary in the pigment dispersion. Further, the aqueous inkjet ink may further contain an organic solvent (hereinafter referred to as an organic solvent for ink) which is generally used in the inkjet ink, and may contain a surfactant and other additives. A concentration of the black pigment in the aqueous inkjet ink can be, for example, 1.0 to 10.0% by weight, and preferably 3.0 to 7.0% by weight in the aqueous inkjet ink. The blending of the pigment dispersion, the organic solvent for ink, and the like is adjusted so that the black pigment concentration falls within this range.

As the organic solvent for ink, general organic solvents used for ink can be used, in addition to the above-described predetermined glycol ethers and predetermined monohydric or polyhydric alcohols. Examples of such an organic solvent for ink include water-soluble organic solvents, and for example, those described in PTLs 1 to 3 and the like can be adopted. Specific examples of the water-soluble organic solvents include monohydric alcohols; polyhydric alcohols such as glycols, diols other than glycols, and glycerin; glycol ethers; ketones such as acetonylacetone; esters such as γ-butyrolactone, diacetin, and triethyl phosphate; lower alkoxyalcohols such as 2-methoxyethanol and 2-ethoxyethanol; amines such as ethanolamine, diethanolamine, triethanolamine, N-methyldiethanolamine, N-ethyldiethanolamine, triethylenetetramine, tetraethylenepentamine, and pentamethyldiethylenetriamine; amides such as formamide, N,N-dimethylformamide, N-methylformamide, and N,N-dimethylacetamide; heterocyclic compounds such as 2-pyrrolidone, N-ethylpyrrolidone, N-methyl-2-pyrrolidone, cyclohexylpyrrolidone, morpholine, N-ethylmorpholine, 2-oxazolidone, 1,3-dimethyl-2-imidazolidinone, imidazole, methylimidazole, hydroxyimidazole, dimethylaminopyridine, 1,3-propanesultone, hydroxyethylpiperazine, and piperazinel; sulfoxides such as dimethyl sulfoxide; and sulfones such as sulfolane. These may be used alone or in combination of two or more of them.

A content of the organic solvent for ink in the aqueous inkjet ink can be appropriately determined in consideration of the concentration of the pigment and the like. For example, a total amount of the organic solvent for ink and the predetermined organic solvent contained in the pigment dispersion can be 10.0 to 30.0% by weight in the aqueous inkjet ink.

The surfactant is not particularly limited, and its examples include anionic surfactants, cationic surfactants, amphoteric surfactants, nonionic surfactants, silicone-based surfactants, and fluorine-based surfactants. Specific examples of them include those described in PTL 2. A content of the surfactant can be, for example, 0.01 to 5.0% by weight in the entire aqueous inkjet ink.

Examples of other additives include an antioxidant, an aggregation inhibitor, a surface conditioner (leveling agent), an antiseptic, a pH adjuster, a rust inhibitor, and an antifoaming agent.

The aqueous inkjet ink can be obtained by mixing the pigment dispersion described above, an organic solvent for ink, and if necessary, a surfactant and other additives, stirring the mixture to be uniform, and then filtering the mixture through a filter in order to remove particles having a certain size or more that can be contained in the ink. A mesh size (pore diameter) and material of the filter can be appropriately determined according to the application and the like.

The aqueous inkjet ink as described above contains the pigment dispersion described above, and thus has the excellent filter filterability even after being formed into an ink. Therefore, as described above, labor can be saved during the filtration treatment, and the inkjet ink can be provided in consideration of the environment, at low cost.

### Examples

Hereinafter, embodiments of the present invention will be described in detail based on Examples.

### (Example 1)

20 parts by weight of carbon black (MA600 manufactured by Mitsubishi Chemical Corporation, average primary particle size: 20 nm, DBP absorption amount: 131 cm³/100 g) as a black pigment, 22.22 parts by weight of a dispersant A to be described later as a dispersant, 6.4 parts by weight of 1,2-hexanediol (1,2-HD) as an organic solvent, 0.4 parts by weight of a 30% by weight NaOH aqueous solution, and 30.98 parts by weight of pure water were mixed to obtain 80.00 parts by weight of a mixed liquid 1. A concentration of the organic solvent in the mixed liquid 1 is 8% by weight. 336 parts by weight of zirconia beads (bead diameter φ: 0.65 mm) were added to the mixed liquid 1, and a dispersion treatment was performed at 2,000 rpm for 120 minutes with a sand mill to obtain a dispersing liquid (dispersion step).

20.00 parts by weight of pure water was added to the obtained dispersing liquid to obtain 100.00 parts by weight (zirconia beads are excluded) of a mixed liquid 2. After the mixed liquid 2 was stirred, the zirconia beads were removed to obtain a pigment dispersion in which the black pigment was uniformly dispersed (adjustment step). A concentration of the organic solvent in the pigment dispersion having a final composition is 6.4% by weight. Furthermore, an average particle size and viscosity of the obtained pigment dispersion were measured by the general method described above.

### (Examples 2 to 11, Comparative Examples 1 to 10)

The dispersion step was performed in the same manner as in Example 1 except that the materials were blended as shown in Tables 1 and 2. Next, a pigment dispersion having a final composition was obtained in the same manner as in Example 1 except that the organic solvent concentration was adjusted to the organic solvent concentrations shown in Tables 1 and 2.

### (Dispersant A)

The dispersant A contains a benzyl acrylate-based copolymer as an active ingredient. This benzyl acrylate-based copolymer is a diblock copolymer composed of a block satisfying benzyl acrylate/acrylic acid/methacrylic acid = 34.6/15.3/0.1 (weight ratio) and a block satisfying benzyl acrylate = 50 (weight ratio) in terms of a monomer composition ratio. The copolymer had an acid value of 128 mgKOH/g and a peak top molecular weight of 8,000.

The dispersant A is a polymer aqueous solution composed of the copolymer, sodium hydroxide, and ion-exchanged water, and is adjusted to have a solid content of 27.0% by weight and a pH of 8.2. The dispersant A does not contain an organic solvent.

### (Dispersant B)

The dispersant B contains a benzyl acrylate-based copolymer as an active ingredient. This benzyl acrylate-based copolymer is a diblock copolymer composed of a block satisfying benzyl acrylate/acrylic acid/methacrylic acid = 34.6/15.3/0.1 (weight ratio) and a block satisfying benzyl acrylate = 50 (weight ratio) in terms of a monomer composition ratio. The copolymer had an acid value of 124 mgKOH/g, an amine value of 0 mgKOH/g, and a peak top molecular weight of 12,400.

The dispersant B is a polymer aqueous solution composed of the copolymer, sodium hydroxide, and ion-exchanged water, and is adjusted to have a solid content of 26.2% by weight and a pH of 8.4. The dispersant B does not contain an organic solvent.

### (Dispersant C)

The dispersant C contains, as its active ingredient, a benzyl methacrylate-based copolymer polymerized using benzyl methacrylate as a constituent monomer without using benzyl acrylate. This benzyl methacrylate-based copolymer is a diblock copolymer composed of a block satisfying methyl methacrylate/acrylic acid = 61.7/11.1 (weight ratio) and a block satisfying benzyl methacrylate = 27.2 (weight ratio) in terms of a monomer composition ratio. The copolymer had an acid value of 93 mgKOH/g, an amine value of 0 mgKOH/g, and a peak top molecular weight of 8,920.

The dispersant C is a polymer aqueous solution composed of the copolymer, sodium hydroxide, and ion-exchanged water, and is adjusted to have a solid content of 21.4% by weight and a pH of 8.2. The dispersant C does not contain an organic solvent.

### (Evaluation)

### <Filterability Test>

### <<Preparation of Test Sample A>>

To each of the pigment dispersions obtained in Examples and Comparative Examples, 400 parts by weight of pure water were added so that the pigment concentration corresponding to the ink composition was 4%, and the mixture was stirred to prepare a test sample A in which the black pigment was uniformly dispersed.

### <<Preparation of Test Sample B>>

397 parts by weight of pure water and 3 parts by weight of 1,2-hexanediol were added to the pigment dispersion of Comparative Example 1 so that the pigment concentration corresponding to the ink composition was 4%, and the mixture was stirred to prepare a test sample B in which the black pigment was uniformly dispersed. In the test sample B, whether late addition of the organic solvent is effective during the preparation of the ink composition is confirmed, in comparison with the test sample A using the pigment dispersion of Example 2.

### «Test»

A filterability test was performed on each of the obtained test samples A and B by the following method.

A 500 mL sample bottle weighed in advance was allowed to stand in an instrument for a vacuum filtration system (VT-500 manufactured by ADVANTEC CO.,LTD.). A filter holder for vacuum filtration (KGS-47 manufactured by ADVANTEC CO.,LTD.) equipped with a membrane filter (NNG29325 manufactured by Nihon Pall Ltd., mesh size 1.2 µm) was installed at an upper part of the vacuum filtration system. In a state where suction was performed at a pressure of 0.08 MPa, 500 g of the test sample was charged and filtered. After 3 minutes, the suction was stopped and the pressure was returned to normal pressure, and then the 500 mL sample bottle was taken out and weighed. By calculating the difference in weight before and after the filtration, the weight (filtration amount) of the filtered product passing through the filter per 3 minutes was determined. Evaluation criteria of the filtration amount were as follows: acceptable at 90.0 g/3 minutes or more, good at 150 g/3 minutes or more, and excellent at 200 g/3 minutes or more. The evaluation results using the test sample A are shown in Tables 1 and 2. In addition, the result in the case of using the test sample B was 26.1 g/3 min. Furthermore, in Comparative Examples 9 and 10, the viscosity was high and the filterability test could not be performed, and thus the results were indicated as "-" in Table 2.

**[Table 1]**

| | | | Examples | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| | Carbon black | MA600 | 20 | 20 | 20 | 20 | 20 | 20 | 20 | 20 | 20 | | |
| | | HIBLACK890 1) | | | | | | | | | | 20 | 20 |
| | | MCF88 2) | | | | | | | | | | | |
| | | #3050B 3) | | | | | | | | | | | |
| | Dispersant A | | 22.22 | 22.22 | 22.22 | 22.22 | 22.22 | 22.22 | 22.22 | 22.22 | 22.22 | 29.63 | |
| | Dispersant B | | | | | | | | | | | | 22.90 |
| | Dispersant C | | | | | | | | | | | | |
| Blending during dispersion [Parts by weight] | Organic solvent | 1,2-HD | 6.4 | 3 | 2.4 | 1 | | | | | | 3 | 3 |
| | | 1,2-BD 4) | | | | | 3 | | | | | | |
| | | 1,2-OD 5) | | | | | | 3 | | | | | |
| | | 1-Hexanol | | | | | | | 3 | | | | |
| | | BDG 6) | | | | | | | | 3 | | | |
| | | BTG 7) | | | | | | | | | 3 | | |
| | 30% by weight aqueous solution of NaOH | | 0.4 | 0.4 | 0.4 | 0.4 | 0.4 | 0.4 | 0.4 | 0.4 | 0.4 | 0.4 | 0.4 |
| | Water | | 30.98 | 34.38 | 34.98 | 36.38 | 34.38 | 34.38 | 34.38 | 34.38 | 34.38 | 26.97 | 33.70 |
| | Total | | 80.00 | 80.00 | 80.00 | 80.00 | 80.00 | 80.00 | 80.00 | 80.00 | 80.00 | 80.00 | 80.00 |
| Organic solvent concentration [% by weight] | | During dispersion | 8 | 3.75 | 3 | 1.25 | 3.75 | 3.75 | 3.75 | 3.75 | 3.75 | 3.75 | 3.75 |
| | | At the time of final composition | 6.4 | 3 | 2.4 | 1 | 3 | 3 | 3 | 3 | 3 | 3 | 3 |
| Evaluation | Average particle size (nm) | | 139 | 135 | 136 | 141 | 139 | 145 | 142 | 139 | 140 | 101 | 108 |
| | Viscosity (mPa·s) | | 9.18 | 7.36 | 6.94 | 7.8 | 7.98 | 14.72 | 7.01 | 7.97 | 8.78 | 11.07 | 8.39 |
| | Filtration amount (g/3 mm) | | 136 | 242 | 170 | 105 | 153 | 168 | 104 | 147 | 118 | 278 | 214 |

| | | | | | | | | | | | | | |
|---|---|---|---|---|---|---|---|---|---|---|---|---|---|
| 1) Manufactured by Orion Engineered Carbons Co., Ltd., average primary particle size: 15 nm, DBP absorption amount: 95 cm³/100 g 2) Manufactured by Mitsubishi Chemical Corporation, average primary particle size 18 nm, DBP absorption amount 55 cm³/100 g 3) Manufactured by Mitsubishi Chemical Corporation, average primary particle size 50 nm, DBP absorption amount 175 cm³/100 g 4) 1,2-butanediol 5) 1,2-octanediol 6) Diethylene glycol monobutyl ether 7) Triethylene glycol monobutyl ether | | | | | | | | | | | | | |

**[Table 2]**

| | | | Comparative Examples | | | | | | | | | |
|---|---|---|---|---|---|---|---|---|---|---|---|---|
| | | | 1 | 2 | 3 | 4 | 5 | 6 | 7 | 8 | 9 | 10 |
| | Carbon black | MA600 | 20 | 20 | | | | | | | | |
| | | HIBLACK890 1) | | | 20 | | | | | 20 | 20 | 20 |
| | | MCF88 2) | | | | 20 | 20 | | | | | |
| | | #3050B 3) | | | | | | 20 | 20 | | | |
| | Dispersant A | | 22.22 | 22.22 | 29.63 | 22.22 | 22.22 | 22.22 | 22.22 | | | |
| | Dispersant B | | | | | | | | | 22.90 | | |
| | Dispersant C | | | | | | | | | | 28.04 | 28.04 |
| Blending during dispersion [Parts by weight] | Organic solvent | 1,2-HD | | 10 | | 3 | | 3 | | | 3 | |
| | | 1,2-BD 4) | | | | | | | | | | |
| | | 1,2-OD 5) | | | | | | | | | | |
| | | 1-Hexanol | | | | | | | | | | |
| | | BDG 6) | | | | | | | | | | |
| | | BTG 7) | | | | | | | | | | |
| | 30% by weight aqueous solution of NaOH | | 0.4 | 0.4 | 0.4 | 0.4 | 0.4 | 0.4 | 0.4 | 0.4 | 0.2 | 0.2 |
| | Water | | 37.38 | 27.38 | 29.97 | 34.38 | 37.38 | 34.38 | 37.38 | 36.70 | 28.76 | 31.76 |
| | Total | | 80.00 | 80.00 | 80.00 | 80.00 | 80.00 | 80.00 | 80.00 | 80.00 | 80.00 | 80.00 |
| Organic solvent concentration [% by weight] | | During dispersion | 0 | 12.5 | 0 | 3.75 | 0 | 3.75 | 0 | 0 | 3.75 | 0 |
| | | At the time of final composition | 0 | 10 | 0 | 3 | 0 | 3 | 0 | 0 | 3 | 0 |
| Evaluation | Average particle size (nm) | | 137 | 139 | 100 | 86 | 106 | 179 | 152 | 130 | 452 | 808 |
| | Viscosity (mPa·s) | | 6.92 | 14.29 | 9.04 | 5.07 | 5.71 | 7.73 | 7.38 | 8.41 | >1200 | >1200 |
| | Filtration amount (g/3 min) | | 29 | 31 | 66 | 21 | 12 | 23 | 16 | 37 | - | - |

| | | | | | | | | | | | | |
|---|---|---|---|---|---|---|---|---|---|---|---|---|
| 1) Manufactured by Orion Engineered Carbons Co., Ltd., average primary particle size: 15 nm, DBP absorption amount: 95 cm³/100 g 2) Manufactured by Mitsubishi Chemical Corporation, average primary particle size 18 nm, DBP absorption amount 55 cm³/100 g 3) Manufactured by Mitsubishi Chemical Corporation, average primary particle size 50 nm, DBP absorption amount 175 cm³/100 g 4) 1,2-butanediol 5) 1,2-octanediol 6) Diethylene glycol monobutyl ether 7) Triethylene glycol monobutyl ether | | | | | | | | | | | | |

As shown in Tables 1 and 2, the pigment dispersion obtained by using a dispersant containing a predetermined copolymer as an active ingredient and a predetermined carbon black, allowing a predetermined organic solvent to contain a predetermined content ratio range, and undergoing a dispersion treatment, has the sample A that passes a filter in a remarkably larger amount than the sample A of Comparative Examples, and thus is excellent in filter filterability. Furthermore, from the results of the test sample B using Comparative Example 1, if the organic solvent is not used at preparation of the pigment dispersion, and the organic solvent is added for the first time at preparation of the ink composition, the filter filterability is remarkably poor as compared with Examples, and the effect of the organic solvent cannot be obtained. Further, Comparative Examples 9 and 10 in which not a benzyl acrylate-based copolymer but a benzyl methacrylate-based copolymer was contained as an active ingredient for a dispersant had a high viscosity and was difficult to use as an ink.

Therefore, the pigment dispersion having a predetermined composition can provide an aqueous inkjet ink having excellent filter filterability. As a result, the inkjet ink can be provided in consideration of the environment, at low cost.

## Claims

1. An aqueous-inkjet pigment dispersion comprising:
a black pigment; a dispersant; an organic solvent; and water,
the black pigment being carbon black having a dibutyl phthalate (DBP) absorption amount of 80 to 150 cm³/100 g,
the dispersant containing a benzyl acrylate-based copolymer as an active ingredient,
the organic solvent containing at least one selected from a glycol ether having 4 to 10 carbon atoms, a monohydric alcohol, and a polyhydric alcohol, and each of the monohydric alcohol and the polyhydric alcohol being a chain saturated alcohol having 4 to 10 carbon atoms, and
a total amount of the organic solvent being 1 to 8% by weight in a total amount of the aqueous-inkjet pigment dispersion.

2. The aqueous-inkjet pigment dispersion according to claim 1, wherein
the dispersant is contained in an amount of 15 to 60 parts by weight on a solid content basis with respect to 100 parts by weight of the black pigment.

3. A method for manufacturing the aqueous-inkjet pigment dispersion according to claim 1 or 2, the method comprising:
obtaining a mixed liquid containing the black pigment, the dispersant, the organic solvent, and the water, the mixed liquid being adjusted so that a content of the organic solvent in a total amount of the mixed liquid is 1 to 8% by weight, and
dispersing the mixed liquid.

4. An aqueous inkjet ink containing the aqueous-inkjet pigment dispersion according to claim 1 or 2.
